# EUROPEAN PATENT APPLICATION

(11) **EP 2 650 659 A1**
(43) Date of publication of application: **16.10.2013**
(21) Application number: 12164196.3
(22) Date of filing: 13.04.2012
(51) Int. Cl.: G01G 19/02, G01G 3/14

(54) **Weight in motion measuring device for vehicles**

(71) Applicant: Dynawimscale Sarl., 1931 Luxembourg (LU)
(72) Inventor: Peeker, Eerik, 19086 TALLINN (EE)
(74) Representative: Quintelier, Claude

(57) **Abstract**

Weight in motion measuring device provided for measuring a weight value of a load crossing over said device, said measuring device comprises a platform applied in a frame, said platform having a length in a range of 1.0 to 1.2 meter measured in a direction substantially corresponding with the one along which said load crosses said platform, said measuring device being provided with load sensors, whereby said platform and said load sensors are mounted in such a manner with respect to each other that a force applied substantially perpendicular by said load on said platform is transmitted to said load sensors, each load sensor being provided for determining a force value of said force applied thereon, said measuring device comprising a data processing unit connected to each of the load sensors and provided for determining said weight value of said load on the basis of said force values.

## Description

The present invention relates to a weight in motion measuring device.

Such a weight in motion measuring device is known and is used for measuring the weight of vehicles, in particular trucks travelling over a road. The known device uses piezoelectric crystals placed in the tarmac of the road. When the vehicle passes over the piezoelectric crystal, the latter deforms under this load and this deformation is measured in order to determine the load of the vehicle. In such a manner loads exceeding the allowed upper limits can be detected. A weight in motion measuring device has the advantage that it measures the weight while the vehicle is travelling so that there is no need to have the vehicle stopped and put aside the road for measuring the weight of the latter. So those ones having an excess weight can be identified and consequently picked out of the traffic, whilst the ones being in compliance with the weight regulations can normally continue their way.

A drawback of the known device is however that it is not accurate enough, as errors in a range of 5 to 15% of the value to be measured may occur depending on the speed of the vehicle crossing the device. Also the small width of the piezoelectric crystals in comparison to the contact surface of the wheel of a vehicle on the road will adversely affect the measurement.

It is an object of the present invention to realise a weight in motion measuring device which is more accurate over a larger speed range.

For this purpose a weight in motion measuring device is **characterised in that** said measuring device comprises a platform applied in a frame, said platform having a length in a range of 100 to 120 centimetre measured in a direction substantially corresponding with the one along which said load crosses said platform, said measuring unit being provided with a load sensor which is applied in such a manner as to be situated on diagonally opposite sides of said platform, whereby said platform and said load sensors are mounted in such a manner with respect to each other that a force applied substantially perpendicular by said load on said platform is transmitted to said load sensors, each load sensor being provided for determining a force value of said force applied thereon, said measuring device comprising a data processing unit connected to each of the load sensors and provided for determining said weight value of said load on the basis of said force values. As the platform has a length in a range of 1.0 to 1.2 meter it provides sufficient length to be crossed by one wheel of a vehicle, even at a speed of 100 km/h or more, and consequently sufficient time, for carrying out the measurement. Indeed the contact surface of the wheel on the road is substantially less than 1 meter. As the vehicle moves over the platform, all the wheels will pass the measuring device, and consequently the wheel weights, axle weights and vehicle gross weight can be measured. As the sum of forces measured by means of load sensors equals the load on the platform, the weight of the moving wheels as well as standing wheels can be determined. As ratios of force values determined by the load sensors depend on the position of the wheel on the platform, the speed, as well as the longitudinal and the lateral positions of the wheel on the platform can be determined. As in most cases the speed of the vehicle, while crossing the measuring device can be assumed constant, the distances between adjacent axles of the vehicle can be determined. Moreover, even for trucks having more than a single axle, the length of 1 to 1.2 meter will cause that only a single axle is on the measuring device when the truck crosses it as the distance between the axles is more than 1.2 meter. The presence of a first and second load sensor on a diagonally opposite side of the platform enables to measure the load which is spread over the whole platform, thereby providing a more accurate weighting value. As each unit is provided with a load sensor, the load is measured at the opposite corners and thus over the whole platform, which also improves the reliability of the measurement.

A first preferred embodiment of a weight in motion measuring device is **characterised in that** said measuring device further comprises a third and a fourth load sensor mounted diagonally opposed to each other, said first and third load sensor being aligned with a front edge of said platform and said second and fourth unit being aligned with a back edge of said platform. In such a manner, there are on each corner of the measuring member load sensors, which enable a balanced and accurate weight measurement.

A second preferred embodiment of a weight in motion measuring device is **characterised in that** said platform is substantially rectangular, said load sensor being placed within said frame under opposite corners of said platform. Rectangular members have the advantage that they are easy to manufacture and fit adequately to the road pattern in which the device has to be mounted. As the load sensors are on opposite corners of the platform a well balanced weighting is obtained.

A third preferred embodiment of a weight in motion measuring device is **characterised in that** each load sensor comprises at least a first and a second plate, wherein said first and second plate are movably mounted with respect to each other, said first plate being provided to transfer to said second plate said force, said second plate being provided with a strain gage arrangement. The latter provides a reliable manner for measuring the force value.

A fourth preferred embodiment of a weight in motion measuring device is **characterised in that** said strain gage arrangement is provided for measuring a bending moment imposed on said second plate and determine said force value from said bending moment. The bending moment can be reliably measured.

A fifth preferred embodiment of a weight in motion measuring device is **characterised in that** said strain gage arrangement has a set of four strain gages wired into a Wheatstone bridge and applied on said second plate. The use of a Wheatstone bridge enables a reliable measuring.

A sixth preferred embodiment of a weight in motion measuring device is **characterised in that** said platform is mounted between a first and a second bridge plate, said bridge plates being hingedly mounted on said platform. In such a manner, a smooth transition of the moving load from the road to the measuring device and from the measuring device to the road is obtained.

The invention will now be described in more details with reference to the annexed drawings. In the drawings:
figure 1 shows an overall view of a preferred embodiment of a weight in motion measuring device according to the present invention;
figure 2 illustrates the working principle on which the measuring device operates;
figure 3 illustrates how the measuring device is built in the road;
figure 4 shows an exploded view of a preferred embodiment of the measuring device;
figure 5 shows an exploded view of the load sensor;
figure 6a and 6b illustrate the arrangement of the strain gages on the middle plate of the load sensor;
figure 7 illustrates the proportionality between the vertical force F applied on the load sensor and the output voltage registered by the data processing unit; and
figures 8, 9 and 10 illustrate relationships between the wheel weight, Pw, and forces F determined by measuring units.

In the drawings a same reference sign has been allocated to a same or analogous element.

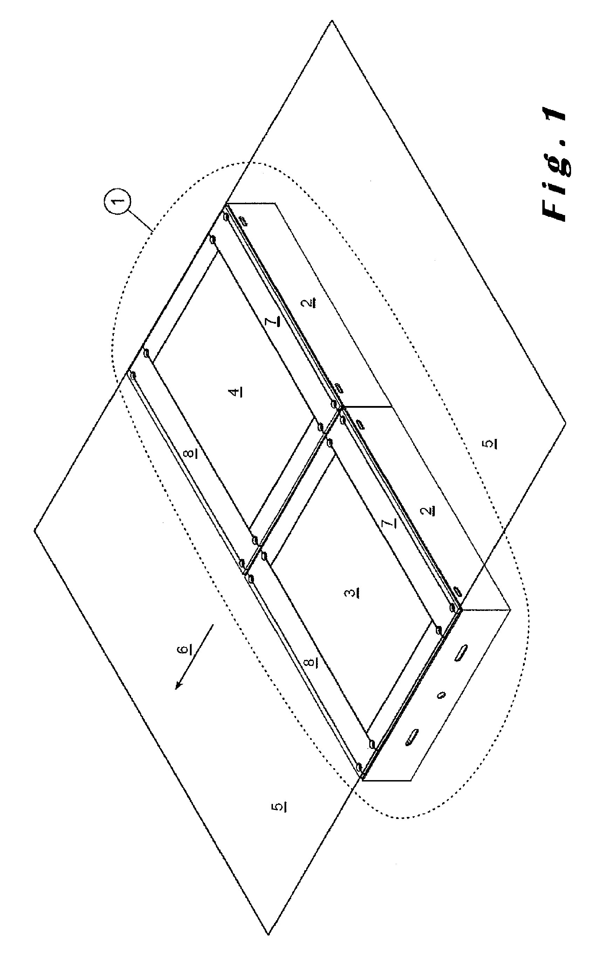

Figure 1 shows an overall view of a preferred embodiment of a weight in motion measuring device 1 according to the present invention. The measuring device is built into the surface of a road 5 on which vehicles travel along a direction indicated by an arrow 6. The device is built in such a manner in the road that an upper surface thereof extends substantially in the surface of the road. In such a manner, vehicles crossing the device will not be obstructed by the device neither will have to reduce their speed.

The illustrated measuring device comprises two members 3 and 4 placed substantially adjacent to each other in a direction perpendicular to the arrow 6. Each member has for example a width corresponding with halve a lane, a length of 150 cm and a height of 36 cm. In such a manner, one of the wheels of a same axle of a vehicle passes over the member 3 whilst the other wheel of that axle passes over the member 4. The device thus measures the weight of both wheels on a same axis. The length of the platform is measured in the direction indicated by the arrow 6 and is situated between 100 and 120 cm, in order to take into account different tyre dimensions and different speeds at which different vehicles may cross the device. Care should however been taken that the length does not exceed a dimension where two tyres belonging to subsequent axles of a same vehicle are simultaneously on the measuring device as this could complicate the processing and the determination of the weight of the vehicle crossing the device. Although the illustrated example shows two members it could also be envisaged to have a single member. In the illustrated example the two members are adjacently aligned with respect to each other, but alternatively the two members could be mounted somewhat offset with respect to each other.

The members 3 and 4 are mounted in a frame 2. Each member is composed of the frame 2, the platform 13 and the bridge plates 7 and 8. One of the transverse edges of bridge plates, with respect to the direction of arrow 6, is supported on the platform and the opposite transverse edges rest on the frame. Longitudinal edges of bridge plates are not supported on the frame. The bridge plates extend substantially perpendicular to the traffic direction (arrow 6) and parallel to the platform. The length of the longitudinal edge of the bridge plate is preferably 20-25 cm. The function of these bridge plates will be described hereinafter. The bridge plate preferably has a length of 20-25 cm.

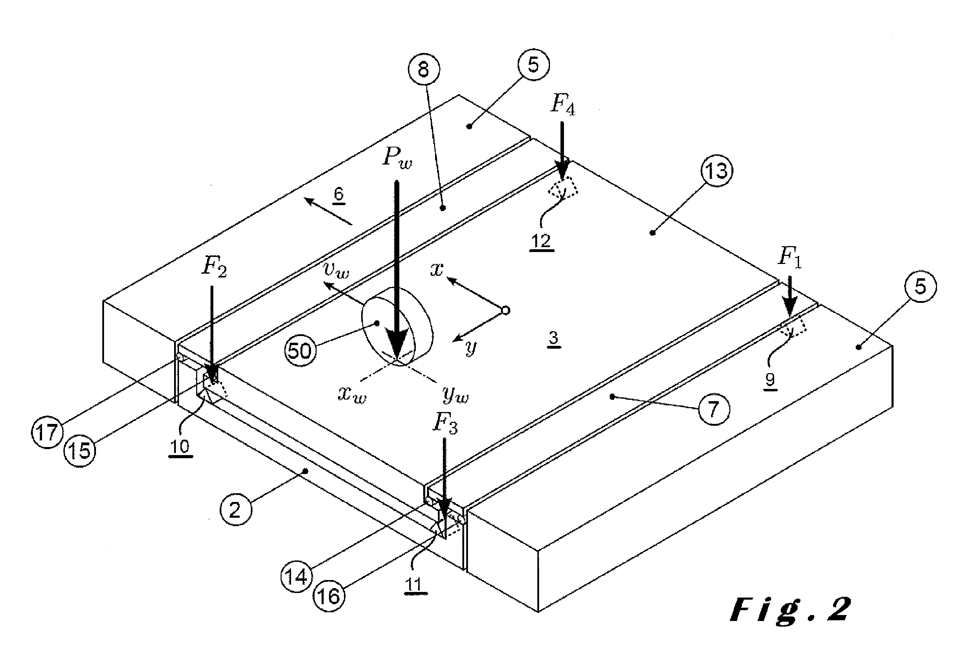

As illustrated in figure 2, the weight in motion measuring device according to the present invention comprises at least one measuring member 3 having at least a first 9 and a second 10 load sensor. In the illustrated embodiment four load sensors are used (9, 10, 11 and 12) which are mounted diagonally opposed to each other, preferably on the corners of the device. The first 9 and the third 11 being aligned on a front edge of the member, whereas the second 10 and the fourth 12 units are aligned on a back edge.member. The platform 13 covers the load sensors 9 to 12 so that the vehicle moving over the device travels on the platform and not directly on the load sensors. The platform and the load sensors are mounted in such a manner with respect to each other that a force applied substantially perpendicularly by a load 50 (schematically illustrated by the wheel 50) on said platform is transmitted to the load sensors.

In order to provide a smooth transition between the road 5 and the platform 13, the first 7 and second 8 bridge plates extend in parallel with the platform. The bridge plates make as if to say a bridge between the road and the platform. In order to enable the bridge plates to move, a small gap extends between the bridge plate and the road and the bridge plate and the platform. The bridge plates are pivotally mounted by means of the pivot axis 14, 15, 16 and 17, so that they will pivot when the wheels of a vehicle 50 travel over them. As the bridge plates are on both sides, considered in the direction of arrow 6, they will act as well when the vehicle reaches the platform, as when the vehicle leaves the platform. By the pivoting movement of the bridge plates there is avoided that the platform feels a sudden impact at the moment when the vehicle wheels reach and leave the platform. Indeed, the fact that the bridge plates pivot around their respective pivot axis 14 to 17 causes that when a vehicle impacts the bridge plate 7, the latter will pivot on its pivot axis, thereby absorbing the sudden impact of the vehicle reaching the platform. This absorption will then enable a smooth transition to the platform 13. The same applies as the vehicle leaves the platform where the bridge plate 8 will hinge and enable a smooth transition to the road for the travelling vehicle. So by using the bridge plates transient effects, which might adversely affect the measuring, are substantially reduced.

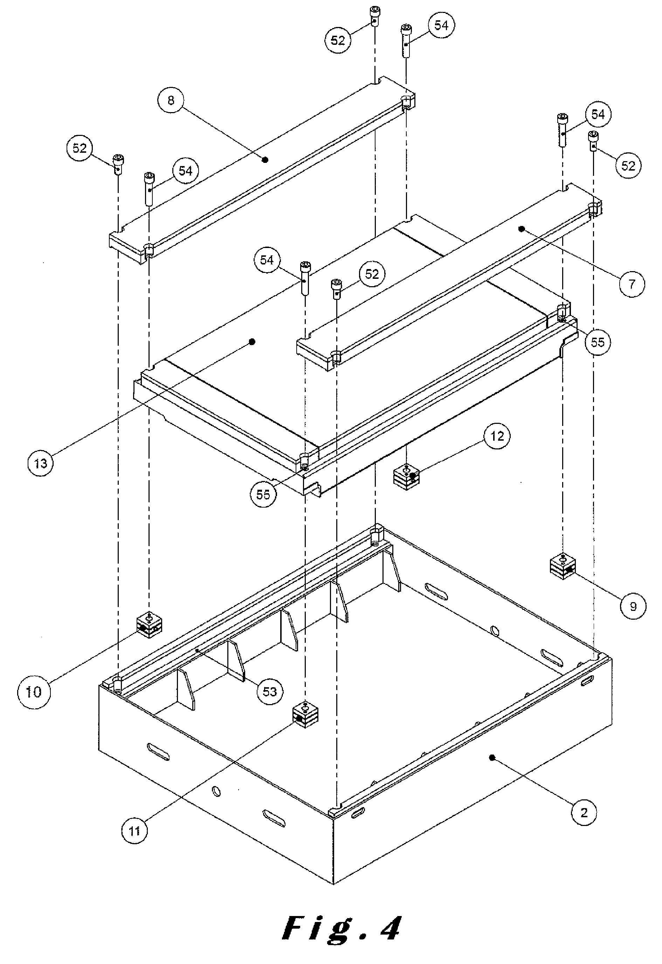

The platform 13 is vertically supported only by load sensors 9 to 12, as shown in more details in figure 4. So when a wheel of the vehicle 50 stands entirely on the platform 13, the pivots axis 14 to 17 ensure that the vertical component of the force (Pw, see figure 2) exerted by that wheel, equals the load of that wheel and is entirely transferred to the frame 2 via load sensors 9 to 12. Hence, the force Pw exerted by that wheel, when entirely on the platform 13, equals the sum of forces F1 to F4 exerted on the load sensors 9 to 12. Those forces F1 to F4 are measured by the load sensors. The horizontal component(s) of the wheel force (e.g. due to breaking or accelerating) are transferred to the frame 2 mainly by the bridge plates 7 and 8. The load sensors 9 to 12 are insensitive to those horizontal forces and the breaking and/or accelerating of the vehicle therefore does not affect accuracy of the measurements done by the load sensors. The ratio of the vertical forces F1 to F4 measured by the load sensors 9 to 12 depends on longitudinal (x) and lateral (y) position of the wheel on the platform and therefore enable a determination of the speed (v_{w}) as well as position (x_{w}, y_{w}) of the wheel on the platform 13.

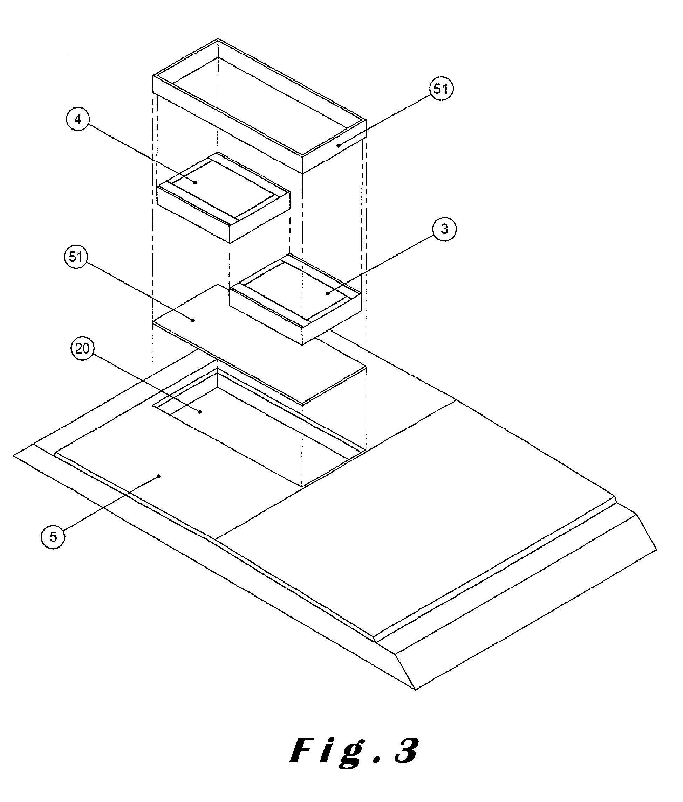

As is illustrated in figure 3 the weight in motion measuring device according to the present invention is applied in the road so as not to form an obstacle for vehicles travelling on the road. For this purpose, a cavity 20 is cut out in the road so as to fit to the device 1. The latter is preferably applied on a layer 51 of concrete, preferably fast hardening concrete as this reduces the time for interrupting the circulation, or sand epoxy laid on the bottom of the cavity so as to form a stable and flat fast hardening basis for the device. Polymers can be used to protect the device against water infiltration or any other substance like dust or salt which might be present on the road. The measuring members 3 and 4 of the measuring device 1 are placed on top of the layer 51 and gaps between the cavity 20 and sides of the measuring members 3 and 4 are then filled with fast hardening concrete or sand epoxy 51. A top layer of sand epoxy (not shown in figure 3) can be applied on upper surfaces of the platform 13 and bridge plates 7 and 8, in order to assure evenness of the measuring device 1 and the surface of the road 5.

As illustrated in figure 4, which shows an exploded view of a weight in motion measuring device according to a preferred embodiment of the present invention, the load sensors rest on the basis inside the frame 2. The platform fits inside the frame and exerts a pressure on the load sensors 9, 10, 11 and 12. For this purpose the platform can freely move with respect to the load sensors on which as if to say it rests. The load sensors are applied under opposite corners of the platform so that they are not in direct contact with the road and the wheels of a vehicle travelling on the platform. When a vehicle crosses the platform, the load of that vehicle will be transferred to the platform, which on its turn will exert a force on each of the load sensors. Once the vehicle has left the platform, the load sensors will of course no longer feel the force applied by the weight of the vehicle.

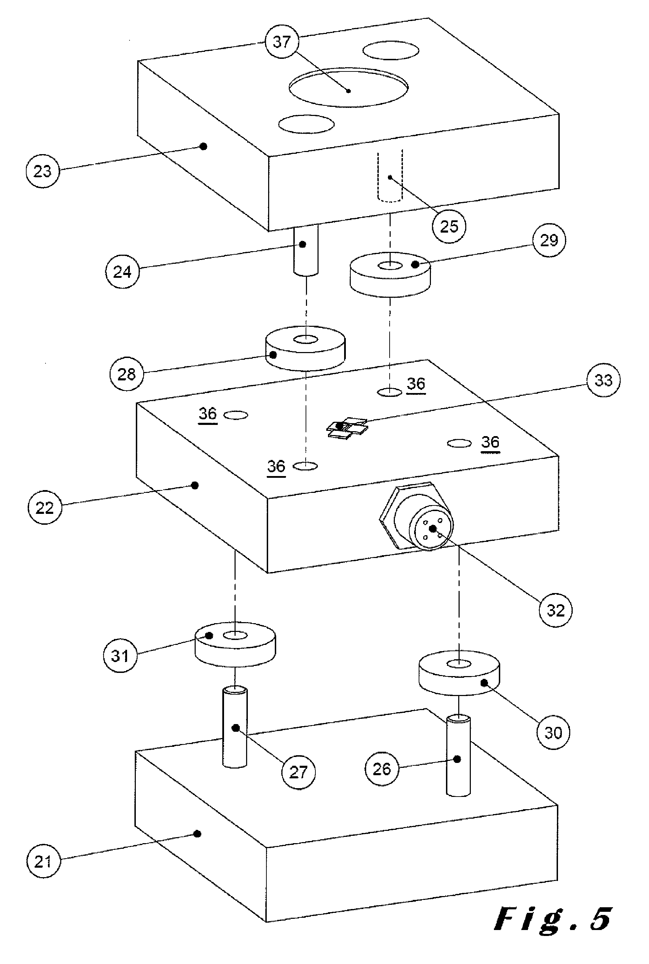

In the embodiment illustrated in figure 4, support bolts 54 are screwed into threaded holes 55 applied in the platform 13. The platform is mounted above the load sensors and the spherical ends of the support bolts 54 create a single-point of contact with the bottom of a cylindrical cavity 37 applied on a top surface of an upper plate 23, which is part of the load sensor, as can be seen in figure 5. The support bolts 54 passing inside the threaded holes enable the final levelling of the platform with the road surface, as well as a setting in order to take care that there is a uniform distribution of the load of the empty platform between the load sensors. The uniform distribution of the platform load and the spherical end of the support bolts in cooperation with the cavities 37 cause a uniform pressure applied by the empty platform on the load sensors.

The outer longer edges of bridge plates 7 and 8 are supported on protrusions 53 applied inside the frame 2, while the inner transversal edges of bridge plates are supported on the frame 13 itself. The longitudinal edges of bridge plates are not supported. The bridge plates are maintained to the frame by bolts 52. Those bolts 52 are only slightly tightened so as to enable the bridge plate to pivot around the pivot axis.

Figure 5 illustrates, by means of an exploded view, an example of a load sensor as part of a measuring device according to the present invention. The load sensor comprises a bottom plate 21, a mid plate 22 and a top plate 23. The mid plate, as the name indicates, is placed between the top and the bottom plate. It should be noted that the presence of the bottom plate is a preferred embodiment and that according to a more basic embodiment the mid plate could directly rest on the frame 2 of the device. The mid plate 22 is movably mounted with respect to the top plate 23 and, if present, to the bottom plate or the frame. For this purpose, rods 24 and 25 extend from an underside of the top plate towards the mid plate and penetrate into perforations 32 present in the mid plate. Further rods 26 and 27 extend from an upper side of the bottom plate 21 towards the mid plate and also penetrate into the perforations 36. The rods 24 and 25, respectively 26 and 27 are diagonally opposite to each other so as to form a squared set-up among each other. Washers 28, 29, 30 and 31 are applied on the respective rods 24, 25, 26 and 27, so as to keep a distance between the top plate and the mid plate and the bottom plate and the mid plate, thereby enabling a more free movement of the mid plate with respect to the top and the bottom plate. The mid-plate 22 is further provided with an electric connection in- and output 32 for power supply and data communication with a data processing device (not shown).

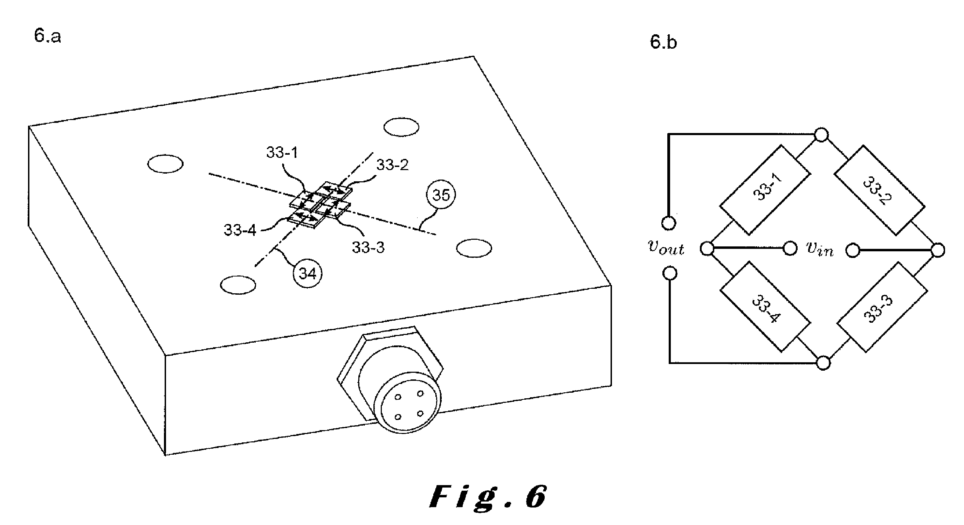

On the mid plate 22 there is applied a load sensor which comprises a strain gage arrangement 33 having a set of four strain gages 33-1, 33-2, 33-3 and 33-4 wired into a Wheatston bridge circuit as illustrated in figures 6a +b. The strain gage arrangement is preferably applied in the middle of the mid plate in order to measure a balanced weight. Strain gages 33-1 and 33-3 respectively 33-2 and 33-4 extend parallel to each other and to a diagonal line 34 respectively 35 connecting the corners of the mid plate. An input voltage Vᵢₙ being applied on the Wheatston bridge such as to measure an output voltage Vₒᵤₜ. The output voltage will be proportional to the bending of the mid plate as a consequence of the load applied on the measurement unit when a vehicle crosses the platform.

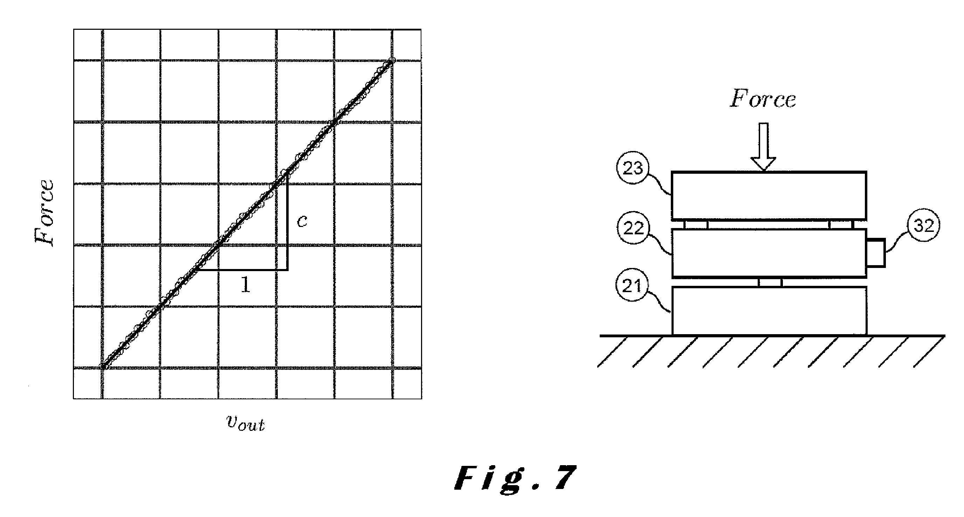

Figure 7 illustrates schematically the relationship between the output voltage Vₒᵤₜ such as output by the strain gage arrangement and the vertical force F applied on the load sensor upon calibration of the strain gage arrangement. As can be seen from this figure the increase of a load applied on the load sensor causes the resistance to change and thus Vₒᵤₜ to increase proportionally with the applied force F. The vertical force F applied on the load sensor causes the middle plate to bend, leading to a small increase in resistance of strain gages, fixed on the surface of the mid plate. The increase in resistance of strain gages results in increase of the output voltage Vₒᵤₜ of the Wheatstone bridge. The change of the resistance of the strain gage arrangement is thus a measure of the load applied on the load sensor. Thus by measuring the output voltage, the applied load on the platform can be measured.

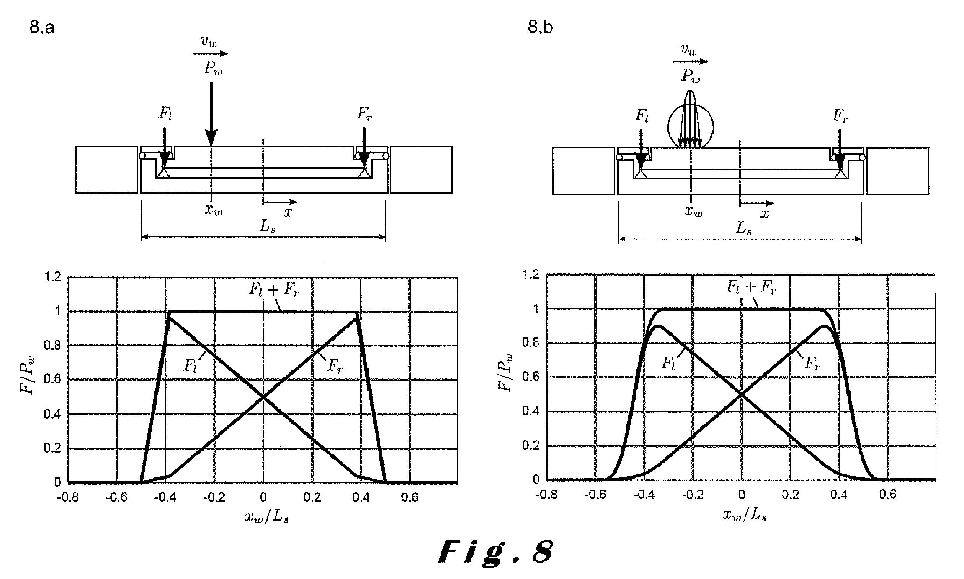

When the vehicle starts to cross the platform 13 the strain gage arrangement of load sensor 9 and 11, if present, will feel the force applied on the load sensor by the load of the vehicle. The force applied on the mid plate, will cause the latter to bend somewhat thereby changing the voltage Vₒᵤₜ output by the strain gage arrangement. Curves Fₗ in the figures 8, 9 and 10 illustrate the behaviour of summed forces measured by the load sensors 9 and 11, while curves Fᵣ illustrate behaviour of summed forces measured by the load sensors 10 and 12. Fₗ gradually increases as the wheel (represented by load Pw in figure2) has passed the bridge plate 7 and reached the front side of the platform. Fₗ reaches its maximum force value when the load Pw is entirely on the platform. Fₗ, gradually decreases when the load moves forward on the platform in order to reach the back side of the platform and finally attains the zero value at the moment when the wheel has left the bridge 8. Curve Fᵣ is a "mirror" image of the curve Fₗ with respect to the middle of the platform. Curve Fᵣ starts to increase when the load is on the platform and reaches its maximum when the load is at the back side of the platform. The sum of forces values Fl and Fr equals wheel load Pw when the wheel is entirely on the platform. Figure 8a also illustrates that the ratio of forces measured depends on position of the load on the platform enabling determination of the position of the wheel on the platform.

Comparison of figures 8a and 8b show the effect of load distribution on forces measured by the load sensors. The real wheel load (tire pressure) is distributed over the contact surface between the tire and the platform (figure 8b) leading to "smooth corners" of force curves measured.

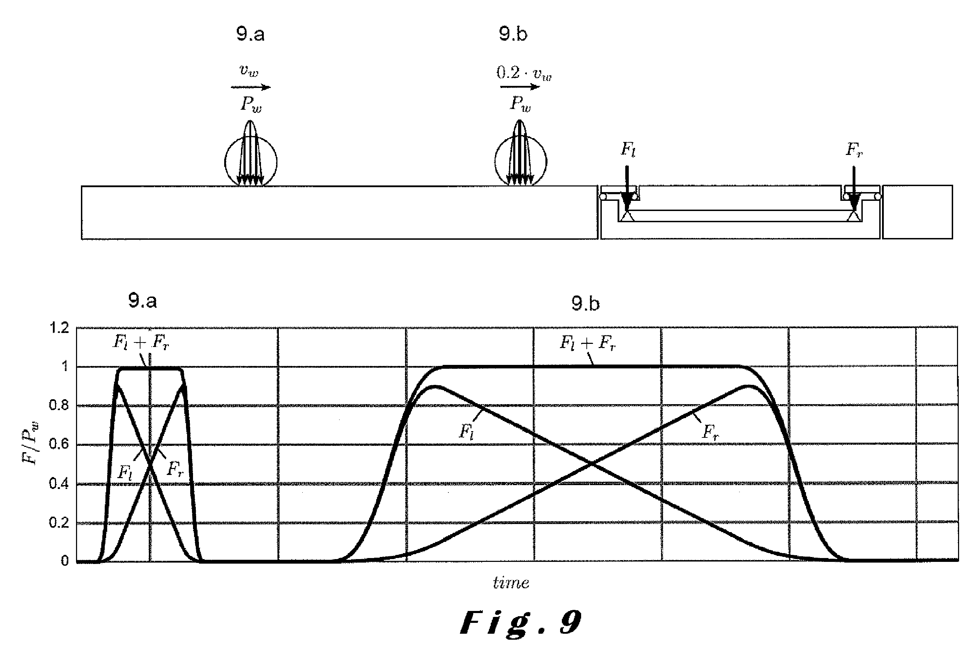

Figure 9a and 9b illustrate how the speed of the moving vehicle influences the shape of the measured force curves. The force curves of slower wheel (9b) are "more spread in time" compared to force curves of faster wheel (9b). Knowing or determining the dimensions of the weight in motion measuring device, shape of the "characteristic load curve" (8b) and sampling rate of the data processing unit, allows to determine the speed of the vehicle.

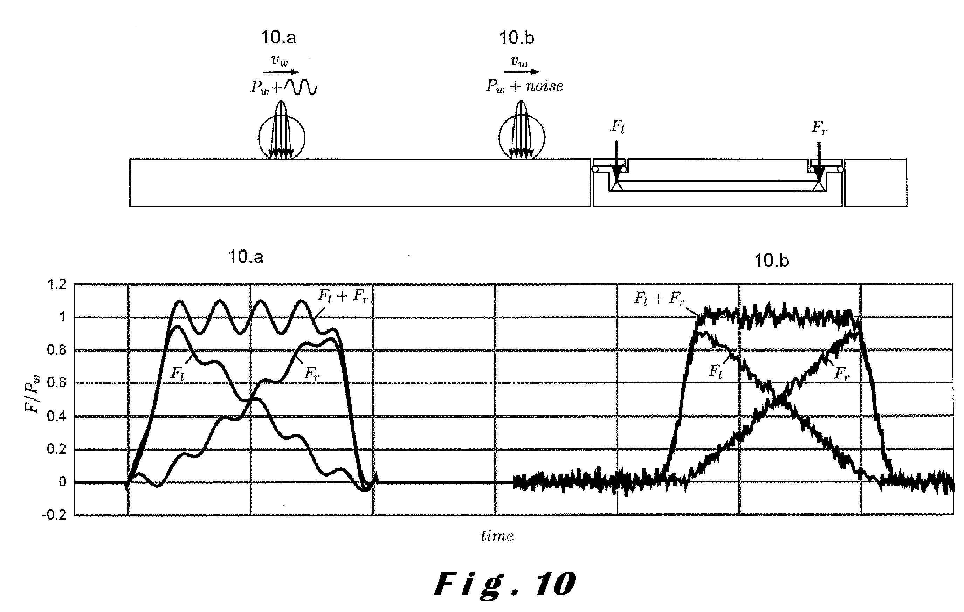

If surface of the road is not smooth and even, the movement of the vehicle will cause oscillations of its wheels and axles (figure 10a). The data processing unit can additionally induce noise into the signal (10b). If the oscillation periods of vehicle wheels and axles are shorter than the time period which the wheel and axle "spend" on the platform, then the influence of oscillations can be eliminated by filtering. Filtering can also be applied to remove the noise from the signal. Longer oscillation periods will corrupt the accuracy of measurements.

## Claims

1. Weight in motion measuring device provided for measuring a weight value of a load crossing over said device, **characterised in that** said measuring device comprises a platform applied in a frame, said platform having a length in a range of 1.0 to 1.2 meter measured in a direction substantially corresponding with the one along which said load crosses said platform, said measuring unit being provided with a load sensor which is applied in such a manner as to be situated on diagonally opposite sides of said platform, whereby said platform and said load sensors are mounted in such a manner with respect to each other that of a force applied substantially perpendicular by said load on said platform is transmitted to said load sensors, each load sensor being provided for determining a force value of said force applied thereon, said measuring device comprising a data processing unit connected to each of the load sensors and provided for determining said weight value of said load on the basis of said force values.

2. Weight in motion measuring device according to claim 1, **characterised in that** said platform rests on said load sensors.

3. Weight in motion measuring device according to claim 1 or 2, **characterised in that** said measuring device further comprises a third and a fourth load sensor mounted diagonally opposed to each other, said first and third load sensors being aligned with a front edge of said platform and said second and fourth units being aligned with a back edge of said platform.

4. Weight in motion measuring device according to any one of the claims 1 to 3, **characterised in that** said platform is substantially rectangular, said load sensors being placed within said frame under opposite corners of said platform.

5. Weight in motion measuring device according to any one of the claims 1 to 4, **characterised in that** each load sensor comprises at least a first and a second plate, wherein said first and second plate are movably mounted with respect to each other, said first plate being provided to transfer to said second plate said force, said second plate being provided with a strain gage arrangement.

6. Weight in motion measuring device according to claim 5, **characterised in that** said strain gage arrangement is provided for measuring a bending moment imposed on said second plate and determine said force value from said bending moment.

7. Weight in motion measuring device according to claim 5 or 6, **characterised in that** said strain gage arrangement having a set of four strain gages wired into a Wheatstone bridge and applied on said second plate.

8. Weight in motion measuring device according to any one of the claims 5 to 7, **characterised in that** said load sensor comprises a third plate movably mounted with respect to said second plate, said second plate being mounted between said first and third plate.

9. Weight in motion measuring device according to any one of the claims 5 to 8, **characterised in that** said first plate is provided with a cavity, said platform comprises support bolts, each having a spherical end which are each time lodged into a respective one of said cavities.

10. Weight in motion measuring device according to any one of the claims 1 to 9, **characterised in that** said platform is mounted between a first and a second bridge plate, said bridge plates being hingedly mounted with respect to said platform and said frame.

11. Weight in motion measuring device according to any one of the claims 1 to 10, **characterised in that** said measuring device comprises two members dimensioned to be placed substantially adjacent to each other along an axis extending perpendicular to a traffic direction of a road and in such a manner that they fit into a lane of said road, each member comprising at least two of said load sensors.
